# FASCICULE DE BREVET EUROPEEN

(11) **EP 2 168 789 B1**
(45) Date de publication et mention de la délivrance du brevet: **20.06.2012**
(21) Numéro de dépôt: 09305865.9
(22) Date de dépôt: 17.09.2009
(51) Int. Cl.: B60G 21/05, B60B 35/04

(54) **Essieu souple arrière à palonnier et traverse creuse et véhicule correspondant**
Flexible Hinterachse mit Hebel und hohlem Querträger und entsprechendes Fahrzeug
Flexible rear axle with hollow cross-bar and cross-member and corresponding vehicle

(30) Priorité: 29.09.2008 FR 0856535
(43) Date de publication de la demande: 31.03.2010
(73) Titulaire: Renault s.a.s., 92100 Boulogne-Billancourt (FR)
(72) Inventeur: Fauqueux, Olivier, 78300 Poissy (FR); Rollet, Rémi, 91190 Gif-sur-Yvette (FR)

(56) Documents cités:
- WO-A-2006/038121
- FR-A- 2 853 281
- FR-A- 2 860 751
- JP-A- 3 045 409
- JP-A- 8 253 010

## Description

L'invention se situe dans le domaine des véhicules automobiles à quatre roues directrices.

La présente invention concerne un essieu souple arrière pour véhicule automobile, ainsi qu'un véhicule muni de cet essieu.

L'invention concerne plus précisément un essieu souple arrière pour véhicule automobile comprenant :
- deux bras oscillants longitudinaux articulés chacun à un support de roues à leur extrémité dirigée vers l'arrière du véhicule et dont l'autre extrémité est articulée à la carrosserie du véhicule ;
- une traverse par laquelle lesdits bras sont reliés ;
- un palonnier s'étendant transversalement à ladite traverse, fixé à la partie médiane de celle-ci et muni de moyens d'articulation autorisant son pivotement autour d'un axe de rotation **Z-Z'** vertical ou sensiblement vertical ;
- un élément de liaison reliant l'extrémité dudit palonnier dirigée vers l'avant du véhicule à la carrosserie, et
- deux bielles reliant chacune l'extrémité du palonnier dirigée vers l'arrière du véhicule à l'un desdits support de roues.

On pourra se reporter à ce sujet au document FR 2 853 281 pour de plus amples explications.

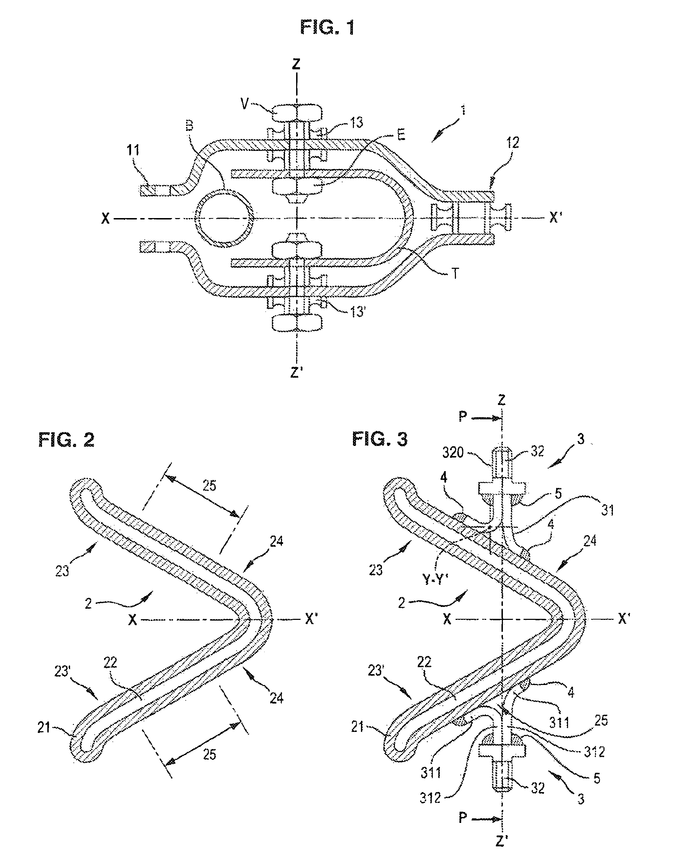

La figure 1 jointe représente de façon schématique et en coupe partielle, un palonnier 1, fixé sur une traverse **T** connue de l'art antérieur, à l'aide de moyens de fixation également connus de l'art antérieur, tels qu'une vis **V** et un écrou **E,** ces éléments étant décrits notamment dans le document FR 2 853 281 précité.

Sur cette figure, l'axe **X-X'** correspond à l'axe longitudinal du véhicule, l'avant du véhicule étant situé sur la gauche de la figure 1 et l'arrière sur la droite de la figure 1.

La traverse **T** a une section droite pleine et présente par exemple un profil en forme de "V", de "U" (comme sur la figure 1) ou de "C" couché, dont l'ouverture est de préférence dirigée vers l'avant du véhicule. Cette traverse, reliée à ses deux extrémités aux deux bras oscillants longitudinaux, est élastiquement déformable en torsion.

Le palonnier 1 présente une section droite ayant sensiblement la forme d'un "C". Son extrémité 11, dirigée vers l'avant du véhicule, est liée à un élément de liaison, non représenté sur la figure, et relié lui-même à la carrosserie ou à l'extrémité avant d'un bras oscillant, cet élément de liaison pouvant être par exemple un vérin ou une bielle. L'extrémité 12 du palonnier 1, dirigée vers l'arrière du véhicule est quant à elle reliée à chaque support de roues par deux bielles non représentées sur les figures.

Par ailleurs, le palonnier présente également des moyens d'articulation 13, 13' qui autorisent son pivotement autour d'un axe de rotation vertical ou sensiblement vertical **Z-Z'.** Ces moyens d'articulation sont par exemple une articulation élastique en caoutchouc, apte à se déformer et qui fait office de rotule pour le palonnier.

Ce type d'essieu souple permet, suivant que l'élément de liaison relié à l'extrémité avant 11 du palonnier est un vérin activé par un moteur ou bien une bielle, dans le premier cas, de provoquer la rotation des roues arrière autour d'un axe sensiblement vertical, en fonction du braquage des roues avant ou de la vitesse de lacet du véhicule, et dans le second cas, de limiter l'amplitude de rotation de ces roues arrière autour d'un axe vertical.

Dans le premier cas, ce type d'essieu est donc particulièrement adapté à un véhicule à quatre roues directrices.

Toutefois, dans ce type de montage conforme à l'état de la technique, et comme on peut le voir sur la figure 1, il est généralement nécessaire d'ajouter à la traverse **T,** une barre anti-devers **B.** Une telle barre anti-devers a pour effet de renforcer la raideur de la traverse.

Pour des raisons de limitation de poids, il a été proposé de supprimer la barre anti-devers **B** et de modifier la structure de la traverse **T** afin qu'elle présente simultanément une raideur élevée pour une faible masse.

A cet effet, il a été proposé de réaliser une traverse présentant une forme en "V", en "U" ou en "C" mais dont la section droite soit creuse et à contour fermé. Un exemple de ce type de traverse, référencée 2, est représenté en coupe sur la figure 2 jointe.

La traverse 2 est un profilé qui comprend une paroi 21 refermée sur elle-même de façon à délimiter un espace intérieur fermé 22. Elle comporte deux branches 23, 23'.

Or, il n'est pas possible de percer ce type de traverse 2 pour fixer le palonnier 1, comme représenté sur le mode de réalisation de la figure 1, car le volume intérieur 22 de la traverse doit rester étanche.

De plus, il n'est pas non plus possible de visser le palonnier 1 au travers des deux portions des parois 21 qui se font face dans chaque branche 23, 23', car celles-ci ne doivent pas se toucher.

L'invention a donc pour objet de fournir un essieu souple arrière de véhicule automobile dont la traverse est à section droite creuse et sur laquelle le palonnier est fixé sans l'endommager.

A cet effet, l'invention concerne un essieu souple arrière pour véhicule automobile comprenant deux bras oscillants longitudinaux articulés chacun à un support de roue à leur extrémité dirigée vers l'arrière du véhicule et dont l'autre extrémité est articulée à la carrosserie du véhicule, une traverse par laquelle lesdits bras sont reliés, un palonnier s'étendant transversalement à ladite traverse, fixé à la partie médiane de celle-ci et muni de moyens d'articulation autorisant son pivotement autour d'un axe de rotation vertical ou sensiblement vertical, un élément de liaison reliant l'extrémité dudit palonnier dirigée vers l'avant du véhicule à la carrosserie et deux bielles reliant chacune l'extrémité du palonnier dirigée vers l'arrière du véhicule à l'un desdits supports de roue.

Conformément à l'invention, ladite traverse présente une section droite creuse à contour fermé et ledit palonnier est fixé sur ladite traverse au moyen de deux dispositifs supports de palonnier, fixés eux-mêmes par soudure à ladite traverse, de part et d'autre de celle-ci, le long dudit axe de rotation.

Selon d'autres caractéristiques avantageuses et non limitatives de l'invention, prises seules ou en combinaison :
- les deux dispositifs supports de palonnier sont soudés sur une zone plane ou quasiment plane de ladite traverse ;
- ledit dispositif support de palonnier comprend au moins deux pattes de fixation, solidaires d'un organe de maintien dudit palonnier, chaque patte de fixation étant pliée de façon à définir deux ailes, à savoir une première aile soudée à ladite traverse et une seconde aile solidaire dudit organe de fixation ;

- ledit organe de maintien du palonnier est un goujon ou un écrou ou est une pièce munie d'un orifice taraudé ;
- ledit organe de maintien du palonnier est fixé de manière définitive auxdites pattes de fixation du dispositif support de palonnier, par soudure ;
- ledit organe de maintien du palonnier est fixé de manière amovible et repositionnable auxdites pattes de fixation du dispositif support de palonnier ;
- ledit organe de maintien du palonnier est retenu par vissage entre les deux secondes ailes des pattes de fixation dudit dispositif support de palonnier.

L'invention concerne également un véhicule automobile muni de l'essieu souple arrière précité.

D'autres caractéristiques et avantages de l'invention apparaîtront de la description qui va maintenant en être faite, en référence aux dessins annexés, qui en représentent, à titre indicatif mais non limitatif, un mode de réalisation possible.

Sur ces dessins :
- la figure 1 est une vue schématique et en coupe partielle d'un palonnier fixé sur la traverse d'un essieu souple, conformément à l'état de la technique ;
- la figure 2 est une vue en coupe transversale de la traverse de l'essieu souple conforme à l'invention ;
- la figure 3 est une vue représentant la traverse en coupe transversale et un premier mode de réalisation d'un dispositif support de palonnier conforme à l'invention ;
- la figure 4 est une vue en perspective représentant une variante de réalisation du dispositif de la figure 3, soudé sur une portion de traverse et ;
- la figure 5 est une vue en perspective représentant un second mode de réalisation du dispositif support du palonnier soudé sur une portion de traverse.

Conformément à l'invention, le palonnier 1 est fixé sur la traverse 2 au moyen de deux dispositifs support de palonnier, fixés eux-mêmes par soudure à ladite traverse 2, de part et d'autre de celle-ci, le long de l'axe de rotation **Z-Z'** précité.

Un premier mode de réalisation d'un dispositif support de palonnier est représenté sur la figure 3. Il porte la référence numérique 3 et comprend deux pattes de fixation 31, solidaires d'un organe de maintien 32 du palonnier.

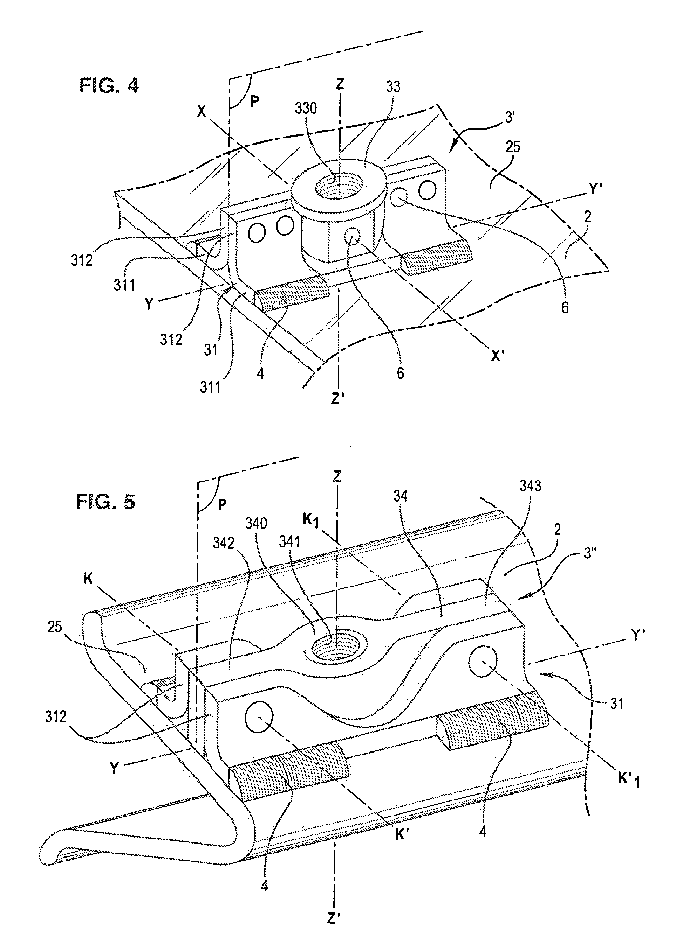

Chaque patte de fixation 31 est pliée selon un axe longitudinal Y-Y' qui s'étend transversalement au véhicule automobile, de façon à définir deux ailes, comme cela apparaît mieux dans le mode de réalisation du dispositif support représenté sur la figure 4.

Chaque patte de fixation 3 comprend ainsi une première aile 311, soudée sur la face extérieure 24 de la paroi 21 de la traverse 2, par une soudure 4, et une seconde aile 312, solidaire de l'organe de fixation 32.

On notera que cette soudure est effectuée dans une zone plane ou quasiment plane de la face extérieure 24 portant la référence 25.

On a vérifié par calcul que les contraintes qui s'exercent dans lesdites zones planes ou quasi planes 25 de la traverse 2 restent très faibles même lorsque le véhicule est soumis au roulis. De plus, cette zone 25 peut supporter le fait que la soudure annihile les effets de la trempe effectuée sur la traverse 2.

Dans le mode de réalisation du dispositif support 3 représenté sur la figure 3, l'organe de fixation du palonnier est un goujon 32, muni d'un filetage 320 sur sa paroi extérieure.

Ce goujon 32 est soudé à sa base aux deux secondes ailes 312 des deux pattes de fixation 31, par une soudure référencée 5.

Les deux dispositifs supports de palonnier 3 sont soudés sur la traverse 2 de façon que les axes des goujons 32 soient coaxiaux et confondus avec l'axe de rotation **Z-Z'** vertical ou sensiblement vertical, autour duquel ledit palonnier est articulé.

De plus, les deux ailes 311 des deux pattes de fixation 31 d'un dispositif 3 s'étendent de part et d'autre d'un plan vertical **P** incluant l'axe **Z-Z'** et perpendiculaire à l'axe **X-X',** de façon à reprendre les efforts exercés sur le goujon 32.

Le palonnier 1 est vissé sur chacun des deux goujons 32, dans la position représentée sur la figure 1.

En se reportant à la figure 4, on peut voir une variante de réalisation d'un dispositif support de palonnier, qui porte la référence 3'.

Ce mode de réalisation diffère du premier précédemment décrit, en ce que l'organe de maintien du palonnier est un écrou 33.

Dans ce cas, les deux secondes ailes ou ailes verticales 312 de chacune des pattes de fixation 31, entourent et enserrent l'écrou 33.

Les deux ailes 312 et l'écrou 33 sont solidarisés par des points de soudure référencés 6.

Sur la figure 4 un seul dispositif support de palonnier 3' est représenté. Toutefois, deux de ces dispositifs 3' sont soudés dans la zone plane ou quasiment plane 25 de la traverse 2, de façon que les axes des orifices taraudés 330 de chaque écrou 33 soient coaxiaux d'axe **Z-Z'.**

Le palonnier 1 est maintenu dans la position représentée sur la figure 1 à l'aide de vis qui sont introduites dans l'écrou 33.

Enfin, en se reportant à la figure 5, on peut voir un second mode de réalisation du dispositif support de palonnier, référencé 3".

Ce dispositif 3" diffère du précédent 3' en ce que l'écrou 33 est remplacé par une pièce 34 munie d'un orifice taraudé.

Cette pièce 34 présente la forme générale d'un parallélépipède rectangle de faible épaisseur dont la partie centrale 340 est cylindrique. Cette partie centrale 340 est percée d'un orifice taraudé 341 dont l'axe est perpendiculaire à l'axe longitudinal de ladite pièce 34.

Les deux extrémités opposées 342, 343 de la pièce 34 sont maintenues entre les deux secondes ailes 312 des pattes de fixation 31 à l'aide de vis et écrous non représentés, et dont seuls les axes de vissage **K-K'** et **K1-K'1** sont représentés.

La pièce 34 repose sur la traverse 2 de façon que l'axe de l'orifice taraudé 341 soit coaxial à l'axe de rotation **Z-Z'** et que les côtés de plus grande largeur de ses extrémités 342, 343, soient au contact des ailes 312.

Sur la figure 5, on a représenté un seul dispositif support de palonnier 3", à des fins de simplification, mais un deuxième est normalement soudé sur la face opposée de la traverse 2, selon les modalités précédemment décrites pour les autres modes de réalisation.

Cette variante de réalisation présente l'avantage que l'organe de maintien 34 du palonnier est fixé de manière amovible et repositionnable auxdites pattes de fixation 31. Ainsi, la pièce 34 peut être aisément remplacée en cas d'usure ou de rupture.

Dans le cas où l'organe de maintien du palonnier est soudé aux pattes de fixation 31, cette fixation est par contre définitive.

On notera que les dispositifs supports de palonnier 3, 3', 3" pourraient éventuellement comprendre plus de deux pattes de fixation 31.

L'invention concerne également un véhicule automobile qui comprend un essieu souple arrière tel que celui qui vient d'être décrit.

## Revendications

1. Essieu souple arrière pour véhicule automobile comprenant deux bras oscillants longitudinaux articulés chacun à un support de roue à leur extrémité dirigée vers l'arrière du véhicule et dont l'autre extrémité est articulée à la carrosserie du véhicule, une traverse (2) par laquelle lesdits bras sont reliés, un palonnier (1) s'étendant transversalement à ladite traverse (2), fixé à la partie médiane de celle-ci et muni de moyens d'articulation (13, 13') autorisant son pivotement autour d'un axe de rotation **(Z-Z')** vertical ou sensiblement vertical, un élément de liaison reliant l'extrémité dudit palonnier (1) dirigée vers l'avant du véhicule à la carrosserie et deux bielles reliant chacune l'extrémité du palonnier (1) dirigée vers l'arrière du véhicule à l'un desdits supports de roue, **caractérisé en ce que** ladite traverse (2) présente une section droite creuse à contour fermé et **en ce que** ledit palonnier (1) est fixé sur ladite traverse (2) au moyen de deux dispositifs (3, 3', 3") supports de palonnier, fixés eux-mêmes par soudure (4) à ladite traverse (2), de part et d'autre de celle-ci, le long dudit axe de rotation **(Z-Z').**

2. Essieu selon la revendication 1, **caractérisé en ce que** les deux dispositifs supports de palonnier (3, 3', 3") sont soudés sur une zone plane ou quasiment plane (25) de ladite traverse (2).

3. Essieu selon la revendication 1 ou 2, **caractérisé en ce que** ledit dispositif support de palonnier (3, 3', 3") comprend au moins deux pattes de fixation (31), solidaires d'un organe de maintien (32, 33, 34) dudit palonnier, chaque patte de fixation (31) étant pliée de façon à définir deux ailes, à savoir une première aile (311) soudée à ladite traverse (2) et une seconde aile (312) solidaire dudit organe de fixation (32, 33, 34).

4. Essieu selon la revendication 3, **caractérisé en ce que** ledit organe de maintien du palonnier est un goujon (32).

5. Essieu selon la revendications 3, **caractérisé en ce que** ledit organe de maintien du palonnier est un écrou (33).

6. Essieu selon la revendications 3, **caractérisé en ce que** ledit organe de maintien du palonnier est une pièce (34) munie d'un orifice taraudé (341).

7. Essieu selon l'une des revendications 3 a 5, **caractérisé en ce que** ledit organe de maintien du palonnier (32, 33) est fixé de manière définitive auxdites pattes de fixation (31) du dispositif support de palonnier (3, 3'), par une soudure (5, 6).

8. Essieu selon la revendications 6, **caractérisé en ce que** ledit organe de maintien du palonnier (34) est fixé de manière amovible et repositionnable auxdites pattes de fixation (31) du dispositif support de palonnier (3").

9. Essieu selon les revendications 3 et 8, **caractérisé en ce que** ledit organe de maintien du palonnier (34) est retenu par vissage entre les deux secondes ailes (312) des pattes de fixation (31) dudit dispositif support de palonnier (3").

10. Véhicule automobile **caractérisé en ce qu'**il comprend un essieu souple arrière selon l'une quelconque des revendications précédentes.

## Claims

1. Flexible rear axle for automobile vehicles, including two oscillating longitudinal arms each articulated to a wheel support at its end directed toward the rear of the vehicle and the other end of which is articulated to the bodywork of the vehicle, a crossmember (2) by which said arms are connected, a swing-arm (1) extending transversely to said crossmember (2), fixed to the median part thereof and provided with articulation means (13, 13') allowing it to pivot about a vertical or substantially vertical rotation axis (Z-Z'), a connecting element connecting the end of said swing-arm (1) directed toward the front of the vehicle to the bodywork of the vehicle, and two links each connecting the end of the swing-arm (1) directed toward the rear of the vehicle to one of said wheel supports, **characterized in that** said crossmember (2) has a hollow closed-contour cross section and **in that** said swing arm (1) is fixed to said crossmember (2) by means of two swing arm support devices (3, 3', 3") themselves fixed by welds (4) to said crossmember (2), on either side thereof, along said rotation axis (Z-Z').

2. Axle according to Claim 1, **characterized in that** the two swing arm support devices (3, 3', 3") are welded to a plane or quasi-plane area (25) of said crossmember (2).

3. Axle according to Claim 1 or Claim 2, **characterized in that** said swing arm support device (3, 3', 3") includes at least two fixing lugs (31) fastened to a retaining member (32, 33, 34) of said swing arm, each fixing lug (31) being bent to define two flanges, namely a first flange (311) welded to said crossmember (2) and a second flange (312) fastened to said fixing member (32, 33, 34).

4. Axle according to Claim 3, **characterized in that** said swing arm retaining member is a pin (32).

5. Axle according to Claim 3, **characterized in that** said swing arm retaining member is a nut (33).

6. Axle according to Claim 3, **characterized in that** said swing arm retaining member is a part (34) provided with a threaded orifice (341).

7. Flexible axle according to any one of Claims 3 to 5, **characterized in that** said swing arm retaining member (32, 33) is permanently fixed to said fixing lugs (31) of the swing arm support device (3, 3') by a weld (5, 6).

8. Axle according to Claim 6, **characterized in that** said swing arm retaining member (34) is removably and repositionably fixed to said fixing lugs (31) of the swing arm support device (3").

9. Axle according to Claims 3 and 8, **characterized in that** said swing arm retaining member (34) is retained by screwing between the two second flanges (312) of the fixing lugs (31) of said swing arm support device (3").

10. Automobile vehicle **characterized in that** it includes a flexible rear axle according to any one of the preceding claims.

## Patentansprüche

1. Flexible Hinterachse für ein Kraftfahrzeug, die zwei Längslenker, die je an ihrem zur Rückseite des Fahrzeugs gerichteten Ende an einen Radhalter angelenkt sind und deren anderes Ende an die Karosserie des Fahrzeugs angelenkt ist, einen Querträger (2), durch den die Arme verbunden sind, einen Schwinghebel (1), der sich quer zum Querträger (2) erstreckt, an dessen Mittelteil befestigt ist und mit Anlenkeinrichtungen (13, 13') versehen ist, die sein Schwenken um eine senkrechte oder im Wesentlichen senkrechte Drehachse (Z-Z') erlauben, ein Verbindungselement, das das zur Vorderseite des Fahrzeugs gerichtete Ende des Schwinghebels (1) mit der Karosserie verbindet, und zwei Pleuelstangen enthält, die je das zur Rückseite des Fahrzeugs gerichtete Ende des Schwinghebels (1) mit einem der Radhalter verbinden, **dadurch gekennzeichnet, dass** der Querträger (2) einen hohlen Querschnitt mit geschlossenem Umriss aufweist, und dass der Schwinghebel (1) am Querträger (2) mittels zweier Schwinghebel-Trägervorrichtungen (3, 3', 3") befestigt ist, die selbst durch Schweißverbindung (4) am Querträger (2) zu dessen beiden Seiten entlang der Drehachse (Z-Z') befestigt sind.

2. Achse nach Anspruch 1, **dadurch gekennzeichnet, dass** die zwei Schwinghebel-Trägervorrichtungen (3, 3', 3") auf eine ebene oder praktisch ebene Zone (25) des Querträgers (2) geschweißt sind.

3. Achse nach Anspruch 1 oder 2, **dadurch gekennzeichnet, dass** die Schwinghebel-Trägervorrichtung (3, 3', 3") mindestens zwei Befestigungslaschen (31) enthält, die fest mit einem Halteorgan (32, 33, 34) des Schwinghebels verbunden sind, wobei jede Befestigungslasche (31) so umgebogen ist, dass sie zwei Flügel definiert, d.h. einen ersten Flügel (311), der an den Querträger (2) geschweißt ist, und einen zweiten Flügel (312), der fest mit dem Befestigungsorgan (32, 33, 34) verbunden ist.

4. Achse nach Anspruch 3, **dadurch gekennzeichnet, dass** das Halteorgan des Schwinghebels ein Bolzen (32) ist.

5. Achse nach Anspruch 3, **dadurch gekennzeichnet, dass** das Halteorgan des Schwinghebels eine Mutter (33) ist.

6. Achse nach Anspruch 3, **dadurch gekennzeichnet, dass** das Halteorgan des Schwinghebels ein mit einer Gewindeöffnung (341) versehenes Bauteil (34) ist.

7. Achse nach einem der Ansprüche 3 bis 5, **dadurch gekennzeichnet, dass** das Halteorgan des Schwinghebels (32, 33) durch eine Schweißnaht (5, 6) endgültig an den Befestigungslaschen (31) der Schwinghebel-Trägervorrichtung (3, 3') befestigt wird.

8. Achse nach Anspruch 6, **dadurch gekennzeichnet, dass** das Halteorgan des Schwinghebels (34) entfernbar und wieder positionierbar an den Befestigungslaschen (31) der Schwinghebel-Trägervorrichtung (3") befestigt ist.

9. Achse nach den Ansprüchen 3 und 8, **dadurch gekennzeichnet, dass** das Halteorgan des Schwinghebels (34) durch Schraubverbindung zwischen den zwei zweiten Flügeln (312) der Befestigungslaschen (31) der Schwinghebel-Trägervorrichtung (3") gehalten wird.

10. Kraftfahrzeug, **dadurch gekennzeichnet, dass** es eine flexible Hinterachse nach einem der vorhergehenden Ansprüche enthält.
